# EUROPEAN PATENT SPECIFICATION

(11) **EP 0 488 709 B1**
(45) Date of publication and mention of the grant of the patent: **05.03.1997**
(21) Application number: 91310985.6
(22) Date of filing: 28.11.1991
(51) Int. Cl.: C08L 83/07, C08L 83/08, C08L 83/14, C08K 5/54

(54) **Silicone rubber composition having excellent durability in repeated mold release**
Silikonkautschukzusammensetzung mit ausgezeichneter Dauerhaftigkeit bei wiederholter Formtrennung
Composition de caoutchouc silicone ayant une excellente durabilité lors de démoulages répétés

(30) Priority: 29.11.1990 JP 331209/90
(43) Date of publication of application: 03.06.1992
(73) Proprietor: SHIN-ETSU CHEMICAL CO., LTD., Chiyoda-ku Tokyo (JP)
(72) Inventor: Takago, Toshio, Annaka-shi, Gunma-ken (JP); Sato, Shinichi, Annaka-shi, Gunma-ken (JP); Inomata, Hiroshi, Annaka-shi, Gunma-ken (JP); Kinami, Hitoshi, Annaka-shi, Gunma-ken (JP)
(74) Representative: Votier, Sidney David

(56) References cited:
- EP-A- 0 208 239
- EP-A- 0 311 262
- EP-A- 0 393 984
- EP-A- 0 458 617
- FR-A- 2 337 731

## Description

### BACKGROUND OF THE INVENTION

### 1. Field of the Invention

The present invention relates to an addition-curable type silicone rubber composition, and more particularly to a silicone rubber composition having excellent durability in repeated mold release.

### 2. Description of the Prior Art

Silicone rubber compositions, due to their excellent mold release properties, chemical resistance, heat resistance and curability, are widely used as, for instance, materials for rubber mold for molding resins such as urethane, epoxy, polyester and vinyl chloride resins and so-called pattern-making silicone rubber mold materials. Such a silicone composition is described, for example, in EP-A-0393984. The silicone rubber compositions are used also as a rubber material for fixing rolls in dry-type copying machine.

In recent years, however, the requirements for durability in repeated mold release have grown to such a level that none of the conventional silicone rubber compositions can meet the requirements satisfactorily. Namely, when a silicone rubber mold according to the prior art is subjected to repeated molding and demolding, the mold surfaces are deteriorated as the repetition number increases; consequently, for example, the resin moldings obtained will have unsatisfactory surface gloss. Therefore, there is a request for a silicone rubber mold material which enables stable production of molded articles of constant quality even when the molding and demolding cycle is repeated a large number of times, that is, a silicone rubber mold material which has excellent durability in repeated mold release.

In order to improve the durability of silicone rubber mold materials in repeated mold release, the use of an organopolysiloxane having a fluorine atom in its molecule has been proposed. However, this is often accompanied by degradation of rubber properties such as water repellency, oil repellency, curability and heat resistance, and no satisfactory improvement has been obtained.

### SUMMARY OF THE INVENTION

Accordingly, it is an object of the present invention to provide a silicone rubber composition having an improved durability in repeated mold release while retaining the excellent properties of silicone rubber, such as high curability and heat resistance.

According to the present invention, there is provided a silicone rubber composition having excellent durability in repeated mold release, comprising:
(a) an organopolysiloxane having at least two unsaturated aliphatic groups in its molecule;
(b) an organohydrogenpolysiloxane which contains a unit of the following formula [I]: 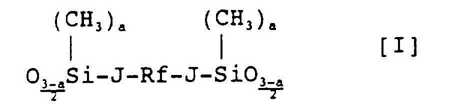 wherein a is an integer of from 0 to 2, J is a divalent hydrocarbon group of two or more carbon atoms, Rf is a divalent fluorine-containing organic group having the following formula: 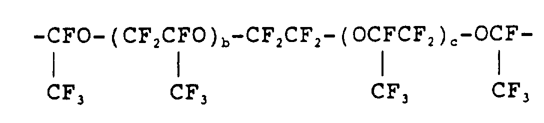 wherein b and c are each an integer of from 0 to 5, in its molecule and which has at least six Si-H bonds in its molecule; and
(c) an addition reaction catalyst.

Namely, the silicone rubber composition of the present invention contains, as a crosslinking agent, an organohydrogenpolysiloxane having a specified fluorine-containing molecular structure, whereby an improved durability in repeated mold release is attained successfully.

Particularly, in the most preferable silicone rubber composition according to the present invention, as will be evident from Examples below, an about 100% improvement in durability in repeated mold release can be achieved, as compared to those of conventional silicone rubbers.

The silicone rubber composition of the present invention is markedly useful as rubber material for producing pattern-making silicone rubber molds used in vacuum casting, and fixing rolls in dry-type copying machines.

### BRIEF DESCRIPTION OF THE DRAWINGS

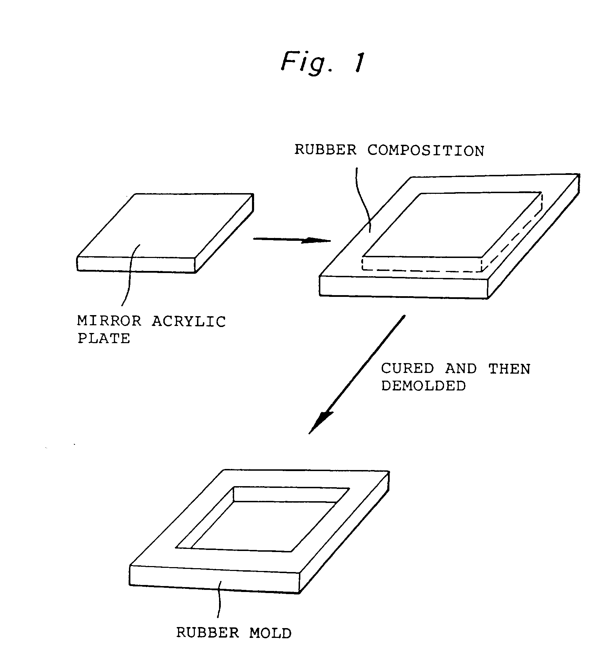

Figure 1 is an illustration of a process for producing a rubber mold from rubber compositions prepared in Example 2.

### DETAILED DESCRIPTION OF THE INVENTION

### (a) Organopolysiloxane

In the silicone rubber composition of the present invention, the organopolysiloxane of component (a) used as a base polymer has at least two unsaturated aliphatic groups bonded to silicon atoms in its molecule.

The unsaturated aliphatic groups include, for example, vinyl, allyl, isopropyl, cyclopentyl, cyclohexyl and silacyclopentenyl, of which the most preferred is the vinyl group in view of easy synthesis and economy. For obtaining a suitable rubber elasticity upon cure, the unsaturated aliphatic groups are preferably used in an amount such that the total amount of the unsaturated aliphatic group-containing siloxane units is from 0.001 to 2 mol%, more preferably from 0.005 to 1 mol%, based on the silicone rubber composition. Furthermore, the unsaturated aliphatic groups may each be present at either a terminal end or an intermediate position of the molecular chain.

The organopolysiloxane as above may further contain other silicon-bonded organic groups than the unsaturated aliphatic groups. The other silicon-bonded organic groups include, for example, alkyl groups such as methyl, ethyl, propyl, butyl, pentyl, hexyl, octyl, decyl and dodecyl; aralkyl groups such as 2-phenylethyl and 2-phenylpropyl; aryl groups such as phenyl; and groups derived from these groups by substituting part or all of the hydrogen atoms in these groups by fluorine or other halogen atoms, for example, such groups as 3,3,3-trifluoropropyl.

For further improvement of mold release properties, it is preferable to introduce fluorine atoms into side chains or the backbone chain of the organopolysiloxane, in such an amount as to make the organopolysiloxane have a fluorine content of 0.5% by weight or above, more preferably 1% by weight or above. It is particularly preferable that the organopolysiloxane is modified, at its side chain or backbone chain, by a perfluoroalkyl or perfluoroalkylene group of 6 or more carbon atoms. Also preferable is an organopolysiloxane which is modified, at its side chain or main chain, by a fluorine-containing organic group having an ether linkage therein. Such modified organopolysiloxanes include, for example, those which contain at least one of the units having the following formulas: 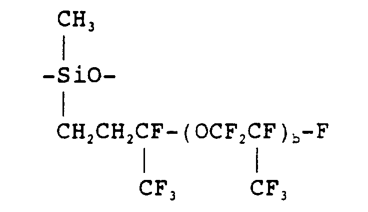 (where b is an integer of from 1 to 5) 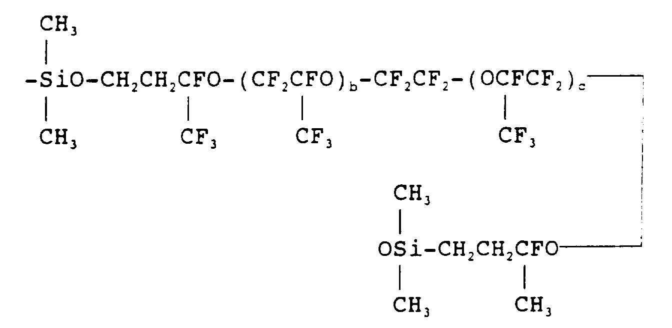 (wherein b and c are each an integer of from 0 to 5)

The polymerization degree of the organopolysiloxane as above is preferably such that the number of the siloxane units is 100 or more, in order for the organopolysiloxane to have a suitable elongation for practical use as a rubber material. However, an organopolysiloxane having a lower polymerization degree can be used together. Further, monodisperse polymers and polymers with a broad molecular weight distribution can also be used.

Where the composition of the present invention is used as a liquid rubber, called RTV or LIMS, it is preferable that the foregoing organopolysiloxane has a viscosity at 25 of from 500 to 50,000 cP, from the viewpoint of workability.

The organopolysiloxane for use in the present invention is exemplified, but not limited to, by the following compounds (in the formulas below, Vi stands for the vinyl group): 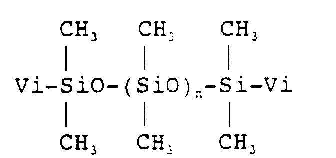 wherein n is an integer of from 0 to 10,000; 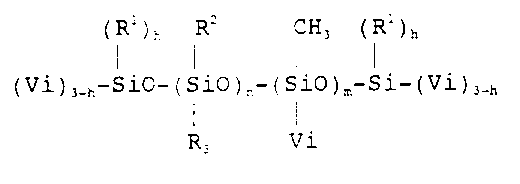 wherein h is an integer from 0 to 3, m+n is an integer from 2 to 10,000, and R¹ to R³ are each a C₁ to C₈ hydrocarbon group such as alkyl or aryl; 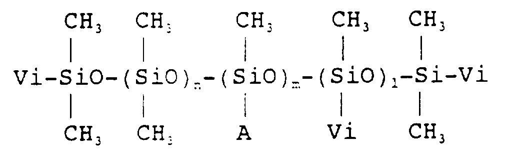 wherein l+m+n is an integer from 2 to 10,000, and A is 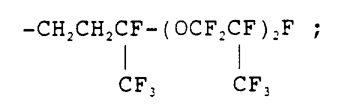 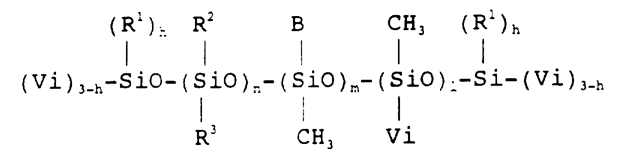 wherein l+m+n is an integer from 2 to 10,000, and B is -J'-(CF₂)ᵢF or 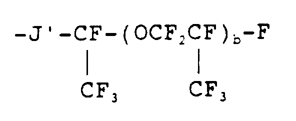 where i is an integer from 1 to 16, b is an integer from 0 to 5, and J' is a divalent organic group such as -CH₂CH₂-; 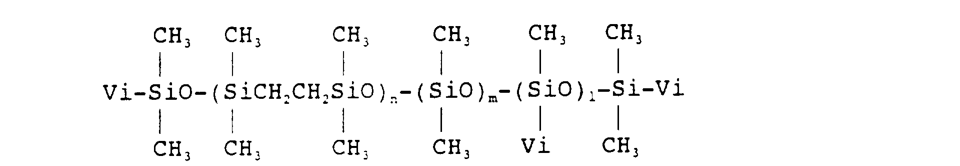 wherein l+m+n is an integer from 2 to 10,000; 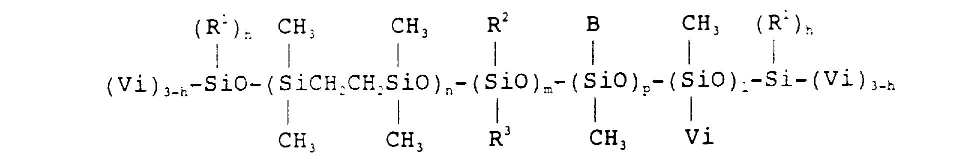 wherein h is an integer from 0 to 3, 1+m+n+p is an integer from 3 to 10,000, and R¹ to R³ and B are as defined above; and 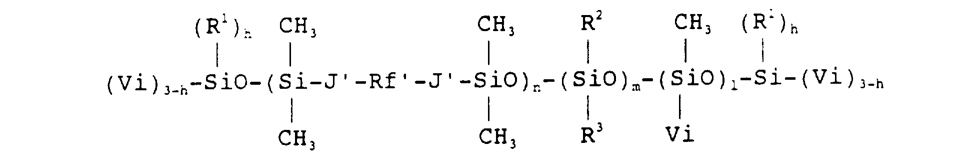 wherein h is an integer from 0 to 3, 1+m+n+p is an integer from 3 to 10,000, R¹ to R³ and J' are as defined above, Rf' is a divalent fluorine-containing organic group such as a perfluoroalkylene group, examples of which include the same groups as will be set forth below as exemplars of Rf.

Of the organopolysiloxanes as above, those containing the unit -(SiCH₂CH₂SiO)- preferably contain the unit in an amount of 50 mol% or above, more preferably 70 mol% or above, and the use of such organopolysiloxane enables the silicone rubber composition to have an improved strength.

The above organopolysiloxanes can be produced by conventionally known processes. For instance, the organopolysiloxanes can be synthesized from cyclic siloxanes such as the followings: 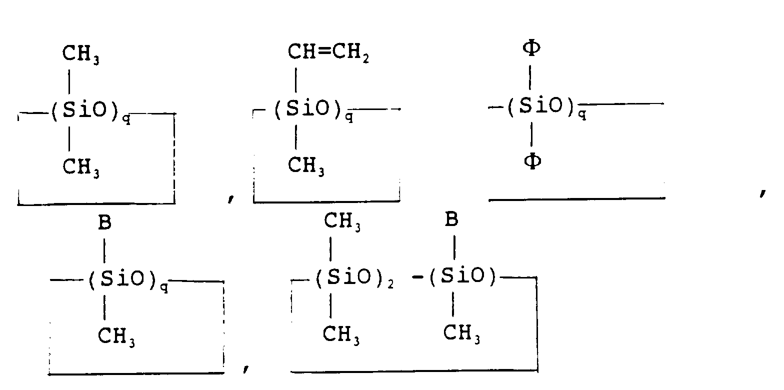 wherein q is an integer of from 3 to 8, Φ is the phenyl group, and B is as defined above. Namely, the above organopolysiloxanes can be produced by bringing the suitable cyclic siloxane or siloxanes to homopolymerization or copolymerization in the presence of a catalyst, such as LiOH, NaOH, KOH or silanolate thereof, to prepare a polymer with a suitable polymerization degree, and silylating the molecular ends of the polymer by use of, for example, 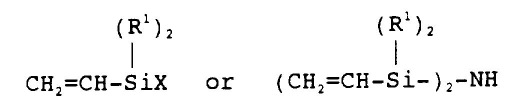 wherein X is a halogen atom or 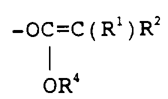 where R¹ and R² are as defined above, and R⁴ is an alkyl group.

Also, among the organopolysiloxanes above, dimethylpolysiloxanes can be produced in the following manner. A mixture of the above cyclic siloxanes together with 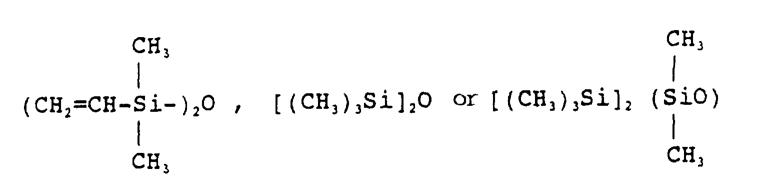 is subjected to equilibration reaction in the presence of the above-mentioned catalyst, a basic catalyst such as (CH₃)₄NOH or (C₄H₉)₄POH, or an acid catalyst such as sulfuric acid fuming sulfuric acid or organic sulfonic acid, at a temperature of from 0 to 200 °C for several tens of minutes to 24 hours, thereby carrying out polymerization to produce a polymer. The catalyst is then deactivated through neutralization, heat treatment, water washing and the like steps, and the reaction product mixture is subjected to purification by stripping of lower-molecular compounds, an active carbon treatment, and filtration, to obtain the desired organopolysiloxane.

### (b) Organohydrogenpolysiloxane

The organohydrogenpolysiloxane used in the present invention to function as a crosslinking agent has at least six Si-H bonds in its molecule and contains a unit of the above general formula [I].

The use of the organohydrogenpolysiloxane having a fluorine-containing unit as a crosslinking agent leads to an improved durability in repeated mold release, without spoiling the excellent properties of silicone rubber.

The divalent hydrocarbon group J in the above general formula (I) includes, for example, alkylene groups and ether linkage-containing alkylene groups, of which part or all of the hydrogen atoms may be substituted by fluorine atoms. Particularly preferable for use in the present invention are alkylene groups of from 2 to 4 carbon atoms, which may contain an ether linkage and may be substituted by fluorine. More preferable examples of the alkylene groups include the following:
-CH₂-CH₂-, -CH₂CH₂CH₂-, 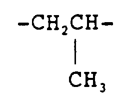 and -CH₂CH₂CH₂OCF₂-.

Some typical, but not limitative, examples of the organohydrogenpolysiloxane for use in the present invention are set forth below. 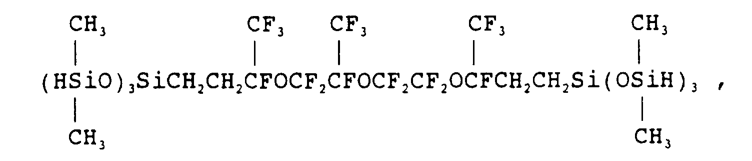 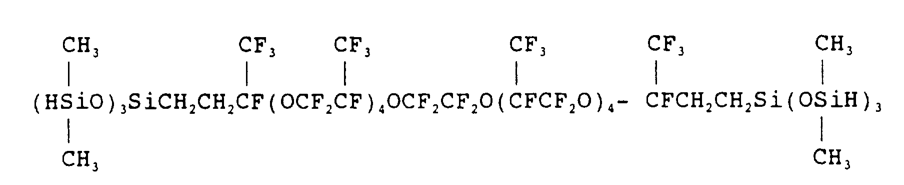 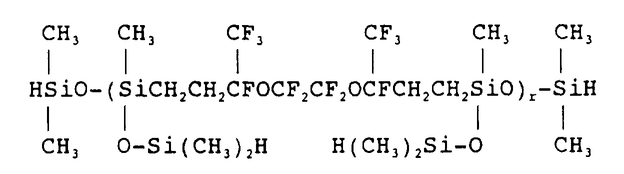 (where r is an integer of 2 to 10), 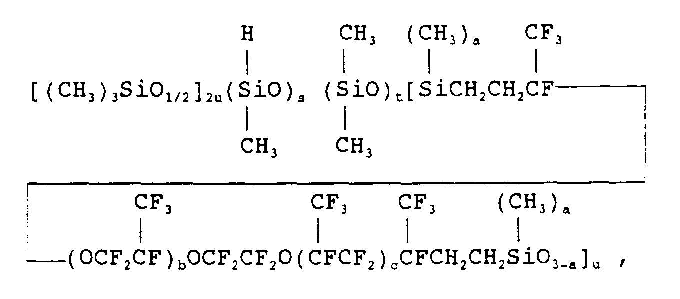 (where a, s, t, u and b are integers in the range of a = 1 to 2, s = 6 to 10, t = 0 to 10, u = 1 to 10, and
b = 0 to 5, respectively), and 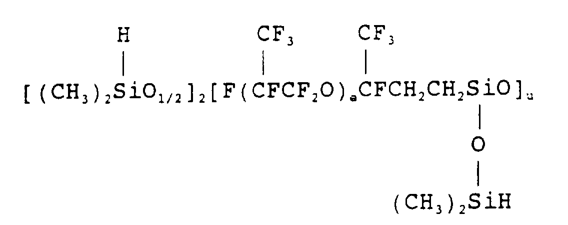 (where u is an integer of 4 to 10, and e is an integer of 1 to 7).

The organohydrogenpolysiloxanes as described above can be produced by processes which are known per se.

For instance, a halosilane corresponding to the objective organohydrogenpolysiloxane and having the formula: 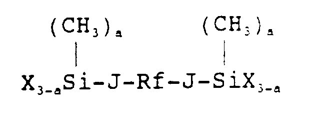 wherein X is a halogen atom, such as chlorine, and J, Rf and a are as defined above, is brought into co-hydrolysis with a silane such as H(CH₃)₂SiX, H(CH₃)SiX₂ or (CH₃)₂SiX₂, in amounts according to a molecular design, whereby the objective organohydrogenpolysiloxane can be produced. The organohydrogenpolysiloxane can also be prepared by another process in which, for example, the above halosilane and a siloxane oligomer such as [H(CH₃)₂Si]₂O, [H(CH₃)SiO]_{q}, or [(CH₃)₂SiO]_{q} (where q is a positive integer), are subjected to co-hydrolysis in the presence of an acid catalyst such as hydrochloric acid or sulfuric acid, or are subjected to the co-hydrolysis followed by equilibration reaction. The compound obtained in this manner is purified through a suitable combination of neutralization, water washing, stripping, distillation, active carbon treatment and filtration, before put to use.

The organohydrogenpolysiloxanes as described above can be used either singly or in combination of two or more. In general, the organohydrogenpolysiloxane is used in an amount of from 0.1 to 50 parts by weight per 100 parts by weight of the organopolysiloxane present as the foregoing component (a). Preferably, the organohydrogenpolysiloxane is used in an amount such as to supply from 0.5 to 5.0 moles of Si-H bonds, more preferably from 1.0 to 3.0 moles of Si-H bonds, per mole of the unsaturated aliphatic groups present in entire the composition. When the amount of the organohydrogenpolysiloxane is too small, the cured rubber obtained may be a gel-like matter with a low crosslink density, and may have unsatisfactory strength and mold release properties. On the other hand, excessively large amounts tend to cause foaming at the time of cure or to result in that the cured rubber is unsatisfactory as to durability in repeated mold release and heat resistance.

Furthermore, the above organohydrogenpolysiloxane can be used in combination with other organohydrogenpolysiloxanes which do not contain fluorine and which have been conventionally used as a crosslinking agent for compositions of this type. In such an instance, also, it is preferable that the mole ratio of the total amount of Si-H bonds to the total amount of unsaturated aliphatic groups is in the above-described range. In order to obtain a transparent cured rubber, in the present invention, it is preferable to select an organohydrogenpolysiloxane which is compatible with the organopolysiloxane used as the component (a).

### (c) Addition reaction catalyst

According to the present invention, an addition reaction catalyst is used to accelerate the addition curing reaction (hydrosilylation) between the above components (a) and (b).

As the addition reaction catalyst, those catalysts conventionally used in addition-curable type silicone rubber compositions can be used, for example, platinum catalysts such as chloroplatinic acid, complexes of chloroplatinic acid with an olefin, e.g. ethylene, or with an alcohol or vinylsiloxane (See U.S. Patent Nos. 3,220,972 and 3,775,452), and solid catalysts such as platinum supported on silica, alumina or carbon. In addition to the platinum catalysts, there have also been known other metal catalysts comprising a platinum family metal such as rhodium, ruthenium, iridium and palladium, for example, RhCl(PPh₃)₃, RhCl(CO)(PPh₃)₂, Ru₃(CO)₁₂, IrCl(CO)(PPh₃)₂, Pd(PPh₃)₄. These catalysts can also be used as the addition reaction catalyst in the present invention. In order to obtain a uniform cured product, in general, chloroplatinic acid and complexes of chloroplatinic acid are used preferably.

These catalysts may be used in a so-called catalytic amount, for example, from 1 to 1000 ppm, preferably from 10 to 500 ppm.

### Other ingredients

The composition of the present invention, if necessary, can incorporate various additives which are known per se.

For example, in order to augment the strength of the elastic mass obtained as the cured product of the composition, organopolysiloxanes of a resin structure composed of SiO₂ units, CH₂=CH(R'₂)SiO_{0.5} units and R'₃SiO_{0.5} units, wherein R' is a monovalent hydrocarbon group which does not contain an aliphatically unsaturated double bond (Refer to Japanese Patent Publication (KOKOKU) Nos. 38-26771 (1963) and 45-9476 (1970)) can be compounded in the composition. Also, for the purpose of controlling the cure rate of the composition, polysiloxanes containing CH₂=CHRSiO units, wherein R has the same meaning as the above R' (See Japanese Patent Publication (KOKOKU) No. 48-10947 (1973)), acetylene compounds (Refer to U.S. Patent No. 3,445,420 and Japanese Patent Publication (KOKOKU) 54-3774 (1979)), and heavy metal ionic compounds (See U.S. Patent No. 3,532,649), can be incorporated in the composition. Furthermore, organopolysiloxanes with no functionality can be added to the composition in suitable amounts, so as to enhance thermal shock resistance and flexibility. When these additives are incorporated into the composition, it is yet desirable that the amount of the Si-H bonds be from 0.5 to 5 moles, preferably from 1.0 to 3.0 moles, per mole of the total amount of silicon-bonded unsaturated aliphatic groups present in the composition.

Moreover, a suitable amount of filler can be added to the composition of the present invention, in order to reduce heat shrinkage at the time of curing, to lower the coefficient of thermal expansion of the elastic mass obtained upon cure, to enhance the thermal stability, weatherability, chemical resistance, flame resistance or mechanical strength of the cured product, or to obtain a lower gas permeability. Such filler includes, for example, metallic oxides such as fumed silica, quartz powder, glass fibers, carbon, iron oxide, titanium oxide and cerium oxide, and metallic carbonates such as calcium carbonate and magnesium carbonate. Furthermore, suitable pigment, dye or antioxidant can also be incorporated in the composition, as required.

### Silicone rubber composition

The silicone rubber composition according to the present invention, comprising the components as above, can be cured at room temperature in some cases, which depend on the kind of the functional groups in the organopolysiloxane of component (a) and the kind of the catalyst of component (c). In general, however, the silicone rubber composition of the invention cures at a temperature of from 50 to 200 in a period ranging from several hours to several minutes, to give a rubberlike elastic cured product.

The composition can be used after being dissolved in a suitable organic solvent such as toluene or xylene, in a desired concentration, according to the intended use of the composition.

The silicone rubber composition of the present invention gives a rubberlike elastic cured product having high strength and excellent transparency, and is therefore extremely useful for such applications as core, cladding or coating of optical fiber. In addition, the composition of the present invention has the characteristic features of capability to form a thin film, excellent mold release properties, high insulation resistance and low water absorption. Therefore, the composition is applicable also to gas or liquid separation film, mold release agent, pattern-making RTV, electrical insulation potting, or adhesive in combination with an adhesive aid, or further to silicone gel for electrical insulation or shock-absorbing purposes. Further, the silicone rubber composition of the present invention can give a cured product of high elongation and strength, without any filler therein, and is applicable to high fatigue resistance rubber, such as nipples and rubber conductors, and high water pressure resistance fiber-treating agent.

### EXAMPLES

In the following examples, "parts" means "parts by weight" and the viscosity values are measurements at 25 °C. Further, "Vi" used in the formulas stands for the vinyl group.

### Example 1, Comparative Examples 1-4

(1) 100 parts of an organopolysiloxane having the following formula: 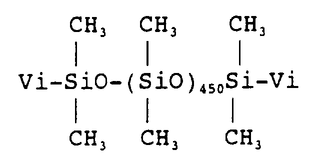 with a viscosity of 5000 mm²/sec (cSt) and a vinyl group content of 0.0065 mole/100 g,
(2) 0.2 part of a toluene solution of a platinum compound obtained by reaction of chloroplatinic acid with [Vi(CH₃)₂Si]₂O, having a platinum concentration of 1.0% and a chlorine content of 50 ppm or below, and
(3) 0.1 part of a cyclotetrasiloxane having the formula [Vi(CH₃)SiO]₄,
were mixed uniformly to obtain a transparent liquid composition.

Next, the following organohydrogenpolysiloxanes A to E were each added as a crosslinking agent to the above liquid composition, in the respective amounts given in Table 1 below, followed by mixing uniformly and defoaming, to obtain five rubber compositions.

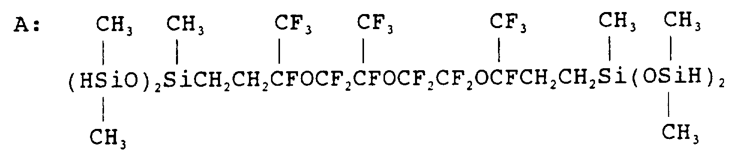

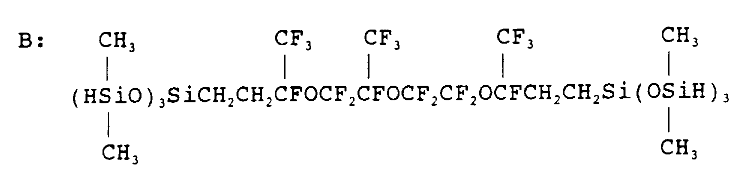

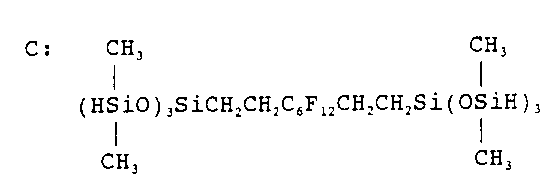

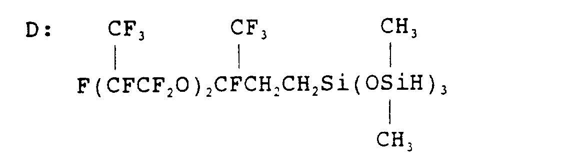

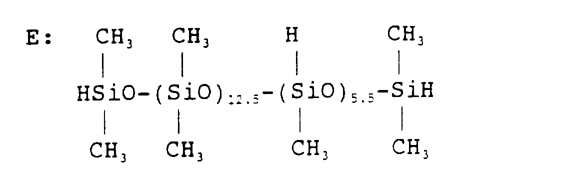

All of the five rubber compositions have good transparency.

Further, each of the rubber compositions was poured into a mold measuring 130 x 170 x 2.0 mm, and cured at 100 for 60 minutes to form an elastomer sheet. Each sheet thus obtained was subjected to measurement of hardness and measurement of contact angle between the sheet and water as well as between the sheet and a silicone oil (KF-96, a product by The Shin-Etsu Chemical Co., Ltd.; viscosity 10 mm²/sec (cSt)). In addition, each elastomer sheet was tested for mold release property after pouring an epoxy resin (CEP-5, a product by Kokusai Chemical) onto the surface of the sheet and curing the resin at 80 °C for 90 minutes. The results are given in Table 1.

**Table 1**

| Example | Cross-linking agent | Addition amount (parts) | Hardness | Contact Angle (degrees) | | Mold release property |
|---|---|---|---|---|---|---|
| | | | | water | oil | |
| Comp. Ex.1 | A | 2.5 | 20 | 106 | 18 | good |
| Example 1 | B | 1.6 | 22 | 110 | 16 | good |
| Comp. Ex.2 | C | 1.9 | 20 | 107 | 13 | good |
| Comp. Ex.3 | D | 2.4 | 12 | 108 | 16 | good |
| Comp. Ex.4 | E | 2.5 | 18 | 103 | wetted | good |

The hardness measurement was carried out on a Type A spring hardness tester according to JIS K-6301.

The above results show that the crosslinking agents A to D are compatible with the organopolysiloxane (a). It is also seen from the results that the cured rubbers obtained using the crosslinking agents A to D are superior, in both water repellency and oil repellency, to the cured rubber obtained by using the dimethylpolysiloxane crosslinking agent E, which has been conventionally used.

### Example 2, Comparative Examples 5-8

A pasty composition comprising:
(1) 92.5 parts of the same organopolysiloxane as that used as (1) in Example 1;
(2) 0.1 part of a 2-ethylhexanol modified chloroplatinic acid catalyst (platinum concentration: 2.0%);
(3) 0.1 part of a cyclotetrasiloxane having the formula [Vi(CH₃)SiO]₄;
(4) 7.5 parts of a toluene-soluble silicone resin composed of SiO₂ units, Vi(CH₃)₂SiO_{1/2} units and (CH₃)₃SiO_{1/2} units (vinyl group content: 0.09 mole/100 g); and
(5) 2.5 parts of water-repellent fumed silica having surfaces treated with [(CH₃)₃Si]₂NH (specific surface area: 170 mg/g)
and having a viscosity of about 1000 poise was prepared.

The organohydrogenpolysiloxanes A to D used in the above example and comparative examples and the following organohydrogenpolysiloxane F were each added as a crosslinking agent to the pasty composition, in respective amounts given in Table 2 below, to prepare rubber compositions.

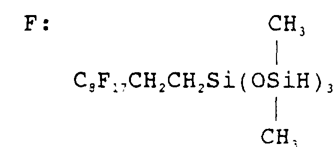

Using each of the rubber compositions, sheets 2 mm thick were prepared similarly to Example 1 and Comparative Examples 1-3, and cured at room temperature for 3 days. Further, the rubber compositions were subjected to molding, curing at room temperature for 3 days and demolding, by use of a acrylic mirror plate (50 x 50 x 5 mm) as shown in Figure 1, to obtain rubber molds (60 x 60 x 10 mm).

The rubber molds thus prepared were used as specimens for measurement of mechanical strength and rubber properties. In addition, molds casting a urethane resin (tradename: Placast UW, a product by Nisili Co., Ltd.) was carried out to determine the durability of the molds in repeated mold release.

The durability in repeated mold release was evaluated as follows. When put to repeated molding and demolding, a silicone rubber mold undergoes surface deterioration, leading to a lowering in the surface gloss of the molded resin articles. Taking this into account, measurement of surface gloss of the molded resin article was carried out on each molding and demolding cycle, and the measured surface gloss was used for determining the degree of deterioration of the relevant rubber mold, and was used as a criterion in evaluation of durability in repeated mold release.

The results are shown in Table 2.

**Table 2**

| | Comp. Ex. 5 | Example 2 | Comp. Ex. 6 | Comp. Ex. 7 | Comp. Ex. 8 |
|---|---|---|---|---|---|
| Crosslinking agent | A | B | C | D | F |
| Addition amount (parts) | 2.9 | 2.2 | 1.8 | 3.2 | 3.1 |

| Properties of cured rubber | | | | | |
|---|---|---|---|---|---|
| Specific gravity | 1.11 | 1.11 | 1.10 | 1.11 | 1.11 |
| Hardness (JIS A) | 31 | 43 | 42 | 32 | 35 |
| Elongation (%) | 450 | 300 | 310 | 47 | 46 |
| Tensile strength (kg/cm²) | 48 | 52 | 50 | 440 | 420 |
| Tear strength A (kg/cm²) | 11 | 15 | 14 | 12 | 13 |

| Surface gloss of molded article (%) | | | | | |
|---|---|---|---|---|---|
| Beginning stage | 100 | 100 | 100 | 100 | 100 |
| After 10 molding runs | 97 | 99 | 98 | 97 | 96 |
| After 20 molding runs | 89 | 96 | 92 | 88 | 70 |
| After 30 molding runs | 76 | 91 | 78 | 70 | 51 |
| After 40 molding runs | 51 | 72 | 56 | 51 | 40 |

It is evident from the above results that the composition containing the crosslinking agent B is especially excellent in mechanical strength. Where the durability in repeated mold release is judged using a surface gloss level of 90% as a criterion, in the case of the rubber mold formed from this composition, the number of molding runs meeting the criterion exceeded 30, whereas the rubber mold formed from the composition containing the crosslinking agent F, which is outside the scope of the present invention, appears to have a corresponding durability value of about 15 molding runs. This comparison indicates an about 100% improvement in durability in repeated mold release.

### Example 3

(1) 100 parts of an organopolysiloxane having the following formula: 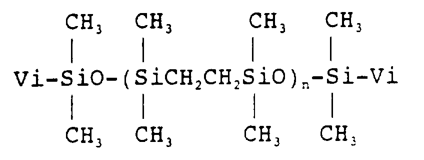 with a viscosity of 4800 mm²/sec (cSt) and a vinyl group content of 0.009 mole/100 g,
(2) 0.2 part of the same platinum catalyst as that used as (2) in Example 1, and
(3) 0.1 part of a cyclotetrasiloxane having the formula [Vi(CH₃)SiO]₄
were mixed together uniformly. To the resulting mixture, the above crosslinking agent B was added in the amount given in Table 3 below, to prepare a rubber composition.

The rubber composition was applied to a polyethylene terephthalate film (210 x 296 x 5 mm) in a thickness of about 100 µm and cured at 100 °C for 60 hours. On the film thus coated, a silicone rubber form 50 x 100 x 5 mm in inner dimensions was fixed by jigs, then a urethane resin (tradename: Quinete 999, a product by Nippon Zeon Co., Ltd.) was poured into the thus fabricated cavity, and cured at 60 °C for 40 minutes.

Upon completion of the curing, the rubber form was removed, and after cooling to room temperature, the peel force required for releasing the molded urethane resin article from the coated film and the surface gloss of the molded article were measured. This operation was repeated using the coated film, for evaluation of durability in repeated mold release. The results are given in Table 3.

**Table 3**

| | | Example 3 |
|---|---|---|
| Crosslinking agent | | B |
| Addition amount | | 2.2 |
| Durability in repeated mold release | Peel force (g/50mm width) | Gloss (%) |
| Beginning stage | 2 | 100 |
| After 10 molding runs | 4 | 99 |
| After 20 molding runs | 2 | 97 |
| After 30 molding runs | 3 | 98 |
| After 40 molding runs | 3 | 97 |

### Example 4

A composition comprising:
(1) 100 parts of an organopolysiloxane having the following formula: 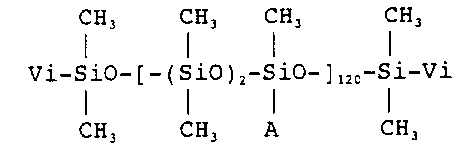 wherein A is 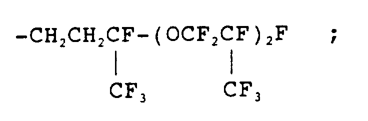
(2) 0.58 part of the crosslinking agent B;
(3) 0.2 part of a platinum catalyst which the same as the platinum catalyst used in Example 2 except for replacing the solvent by m-xylene hexafluoride (platinum concentration: 0.5%); and
(4) 0.05 part of a cyclotetrasiloxane having the formula [Vi(CH₃)SiO]₄
was prepared. In the same manner as in Example 3, the composition was applied to a polyethylene terephthalate film and cured. Then, a test for determining durability in repeated release was carried out using a urethane resin, in the same manner as in Example 3. For comparison, the composition of Comparative Example 4 was also subjected to the same test. The results are given in Table 4.

**Table 4**

| | Example 4 | | Comp. Ex. 4 | |
|---|---|---|---|---|
| Durability in repeated mold release | Peel force (g/50mm width) | Gloss (%) | Peel force (g/50mm width) | Gloss (%) |
| Beginning stage | 3 | 100 | 3 | 100 |
| After 10 molding runs | 4 | 98 | 7 | 98 |
| After 20 molding runs | 7 | 98 | 10 | 95 |
| After 30 molding runs | 11 | 92 | 18 | 90 |
| After 40 molding runs | 25 | 88 | 16 | 84 |

## Claims

1. A silicone rubber composition having excellent durability in repeated mold release, comprising:
(a) an organopolysiloxane having at least two unsaturated aliphatic groups in its molecule;
(b) an organohydrogenpolysiloxane which contains a unit having the following formula [I]: 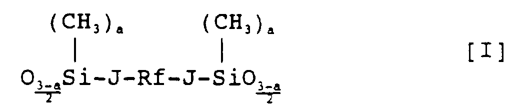 wherein a is an integer of from 0 to 2, J is a divalent hydrocarbon group of two or more carbon atoms, and Rf is a divalent fluorine-containing organic group having the following formula: 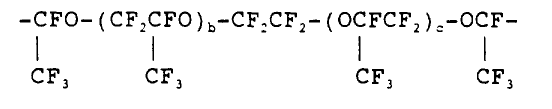 wherein b and c are each an integer of from 0 to 5, in its molecule and which has at least six Si-H bonds in its molecule; and
(c) an addition reaction catalyst.

2. The silicone composition according to claim 1, wherein the divalent hydrocarbon group J in the formula [I] is an unsubstituted or fluorine-substituted alkylene group of from 2 to 4 carbon atoms which may contain an ether linkage.

3. The silicone composition according to claim 2, wherein the divalent hydrocarbon group J in the formula [I] is a group selected from:
-CH₂-CH₂-, -CH₂CH₂CH₂-, 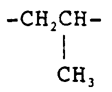 and -CH₂CH₂CH₂-OCF₂-.

4. The composition according to claim 1, wherein the organohydrogenpolysiloxane (b) comprises at least one compound selected from: 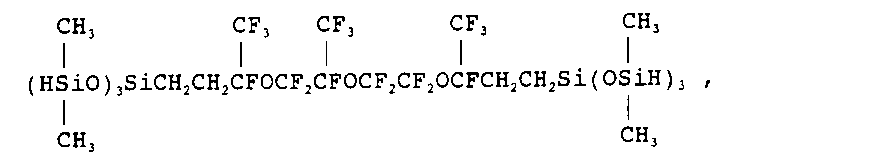 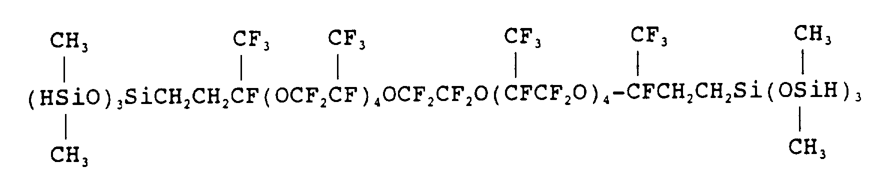 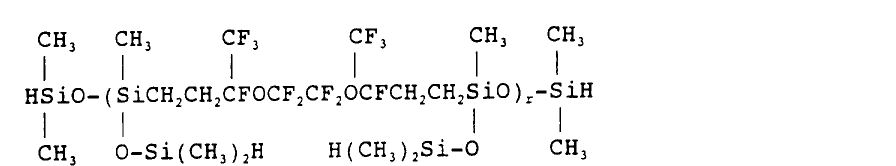 (where r is an integer of 2 to 10), 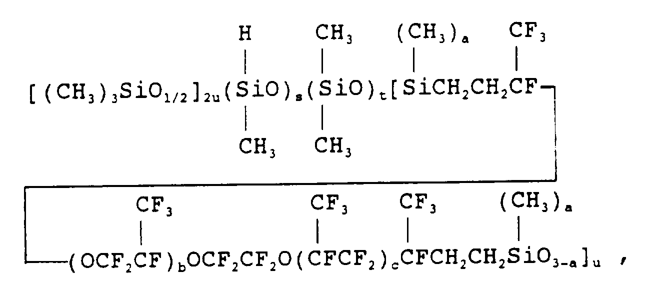 (where a, s, t, u and b are integers in the range of a = 1 to 2, s = 6 to 10, t = 0 to 10, u = 1 to 10, and
b = 0 to 5, respectively), and 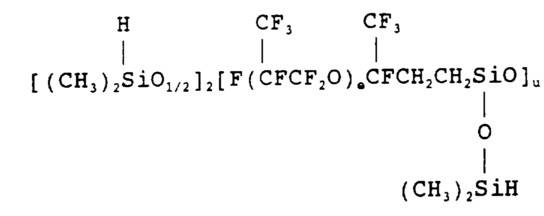 (where u is an integer of 4 to 10, and e is an integer of 1 to 7).

5. The composition according to claim 1, wherein the organohydrogenpolysiloxane (b) is used in an amount of from 0.1 to 50 parts by weight per 100 parts by weight of the organopolysiloxane (a).

6. The composition according to claim 1, wherein the organohydrogenpolysiloxane (b) is used in an amount such that the total amount of Si-H bonds in the composition is from 0.5 to 5.0 moles per mole of the unsaturated aliphatic groups present in the composition.

7. The composition according to claim 1, wherein the unsaturated aliphatic groups of the organopolysiloxane (a) comprises the vinyl group.

8. The composition according to claim 1, wherein the organopolysiloxane (a) contains the unsaturated aliphatic group-containing siloxane units in an amount of from 0.001 to 2 mol%.

9. The composition according to claim 1, wherein the organopolysiloxane (a) is a fluorine-containing organopolysiloxane having a fluorine content of at least 0.5 % by weight.

## Patentansprüche

1. Silikonkautschukzusammensetzung mit ausgezeichneter Dauerhaftigkeit bei wiederholter Formtrennung umfassend:
(a) ein Organopolysiloxan mit wenigstens zwei ungesättigten aliphatischen Gruppen in seinem Molekül;
(b) ein Organohydrogenpolysiloxan, welches eine Einheit der folgenden Formel [1]: 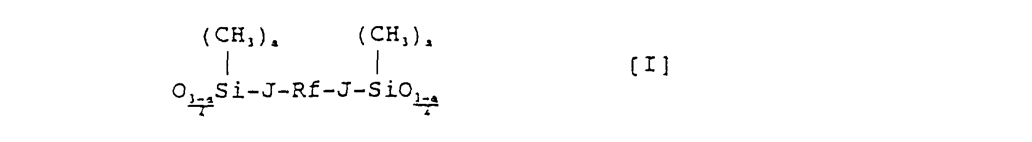 worin a eine ganze Zahl von 0 bis 2 ist, J eine zweiwertige Kohlenwasserstoffgruppe mit zwei oder mehr Kohlenstoffatomen ist und Rf eine zweiwertige fluorhaltige organische Gruppe der folgenden Formel ist: 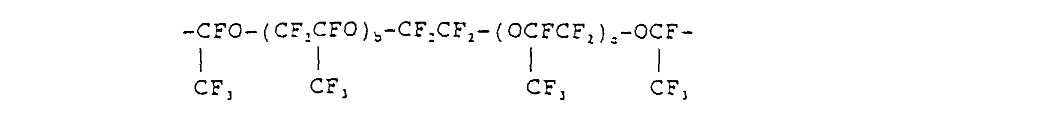 worin b und c jeweils eine ganze Zahl von 0 bis 5 sind, in seinem Molekül enthält und das wenigstens sechs Si-H-Bindungen in seinem Molekül hat; und
(c) einen Additionsreaktionskatalysator.

2. Silikonkautschukzusammensetzung nach Anspruch 1, dadurch gekennzeichnet, daß die zweiwertige Kohlenwasserstoffgruppe J in Formel (I) eine unsubstituierte oder fluorsubstituierte Alkylengruppe mit 2 bis 4 Kohlenstoffatomen ist, die eine Etherbindung enthalten kann.

3. Silikonzusammensetzung nach Anspruch 2, dadurch gekennzeichnet, daß die zweiwertige Kohlenwasserstoffgruppe in Formel (I) eine Gruppe ist, ausgewählt aus:
-CH₂-CH₂-, -CH₂CH₂CH₂-, 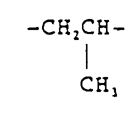 und -CH₂CH₂CH₂OCF₂-

4. Zusammensetzung nach Anspruch 1, dadurch gekennzeichnet, daß das Organohydrogenpolysiloxan (b) wenigstens eine Verbindung umfaßt, ausgewählt aus: 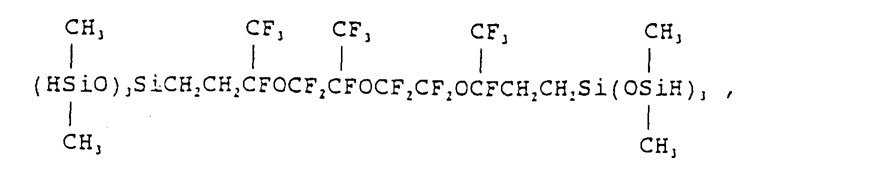 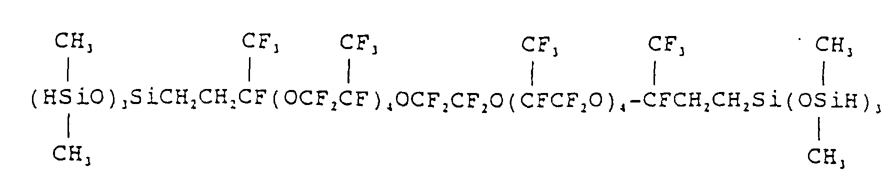 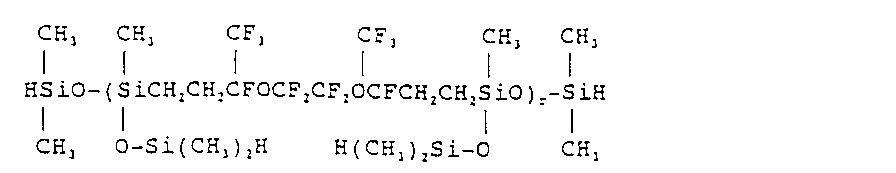 (worin r eine ganze Zahl von 2 bis 10 ist), 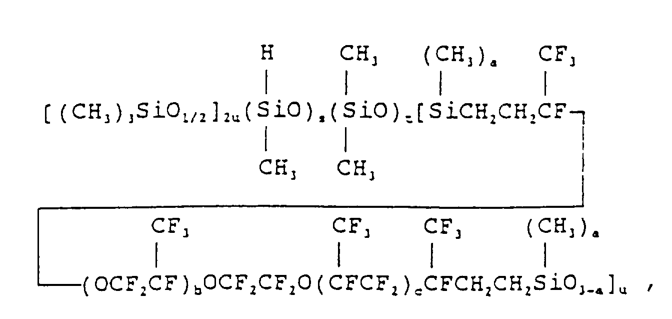 (worin a, s, t, u und b ganze Zahlen im Bereich von a = 1 bis 2, s = 6 bis 10, t = 0 bis 10, u = 1 bis 10 bzw. b = 0 bis 5 sind), und 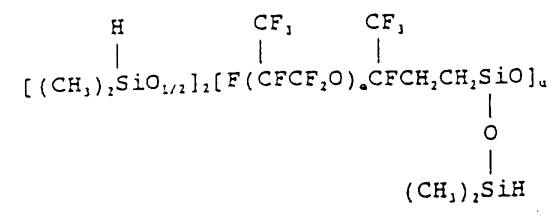 (worin u eine ganze Zahl von 4 bis 10 ist und e eine ganze Zahl von 1 bis 7 ist).

5. Zusammensetzung nach Anspruch 1, dadurch gekennzeichnet, daß das Organohydrogenpolysiloxan (b) in einer Menge von 0,1 bis 50 Gewichtsteilen pro 100 Gewichtsteile des Organopolysiloxans (a) benutzt wird.

6. Zusammmensetzung nach Anspruch 1, dadurch gekennzeichnet, daß das Organohydrogenpolysiloxan (b) in solcher Menge benutzt wird, daß die Gesamtmenge an Si-H-Bindungen in der Zusammensetzung 0,5 bis 5,0 Mol pro Mol der ungesättigten aliphatischen Gruppen ist, die in der Zusammensetzung vorliegen.

7. Zusammensetzung nach Anspruch 1, dadurch gekennzeichnet, daß die ungesättigten aliphatischen Gruppen des Organopolysiloxans (a) die Vinylgruppe umfassen.

8. Zusammensetzung nach Anspruch 1, dadurch gekennzeichnet, daß das Organopolysiloxan (a) die ungesättigte aliphatische Gruppen-enthaltenden Siloxaneinheiten in einer Menge von 0,001 bis 2 Mol-% enthält.

9. Zusammensetzung nach Anspruch 1, dadurch gekennzeichnet, daß das Organopolysiloxan (a) ein fluorhaltiges Organopolysiloxan ist, das einen Fluorgehalt von wenigstens 0,5 Gew.-% hat.

## Revendications

1. Composition de caoutchouc de silicone ayant une excellente durabilité lors de démoulages répétés, comprenant:
(a) un organopolysiloxane ayant au moins deux groupes aliphatiques insaturés dans sa molécule;
(b) un organohydrogénopolysiloxane qui contient une unité ayant la formule [I] ci-dessous: 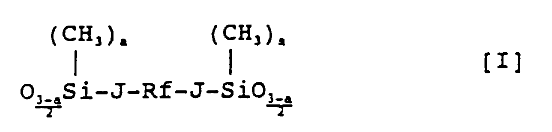 dans laquelle a est un nombre entier de 0 à 2, J est un groupe hydrocarboné bivalent de deux atomes de carbone ou plus, et Rf est un groupe organique contenant du fluor bivalent ayant la formule ci-dessous: 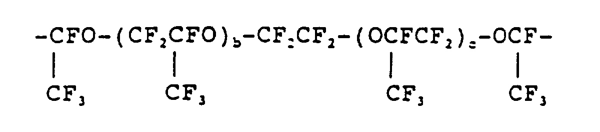 dans laquelle b et c représentent chacun un nombre entier de 0 à 5, dans sa molécule et qui a au moins six liaisons Si-H dans sa molécule; et (c) un catalyseur de réaction d'addition.

2. Composition de silicone selon la revendication 1, dans laquelle le groupe hydrocarboné bivalent J dans la formule [I] est un groupe alkylène non substitué ou substitué par du fluor, de 2 à 4 atomes de carbone, qui peut contenir une liaison éther.

3. Composition de silicone selon la revendication 2, dans laquelle le groupe hydrocarboné bivalent J dans la formule [I] est un groupe choisi parmi: -CH₂-CH₂-, -CH₂CH₂CH₂-, 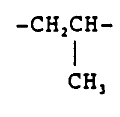 et -CH₂CH₂CH₂OCF₂-.

4. Composition selon la revendication 1, dans laquelle l'organohydrogénopolysiloxane (b) comprend au moins un composé choisi parmi: 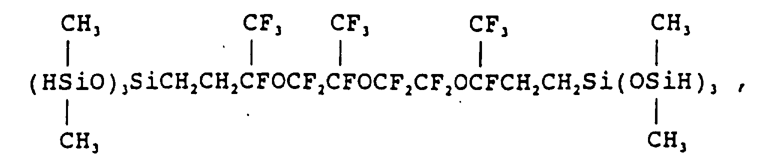 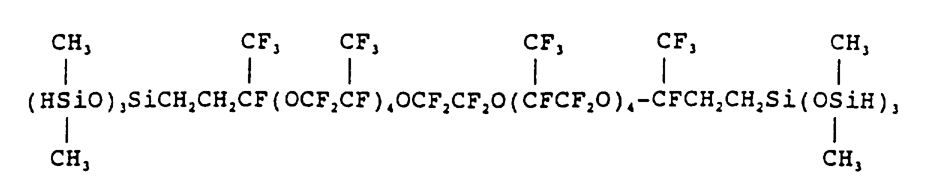 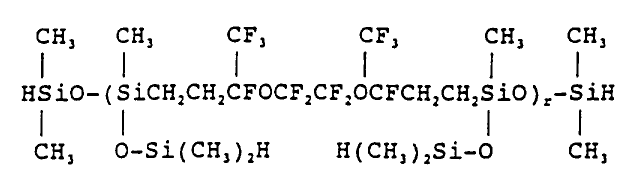 (où r est un nombre entier de 2 à 10), 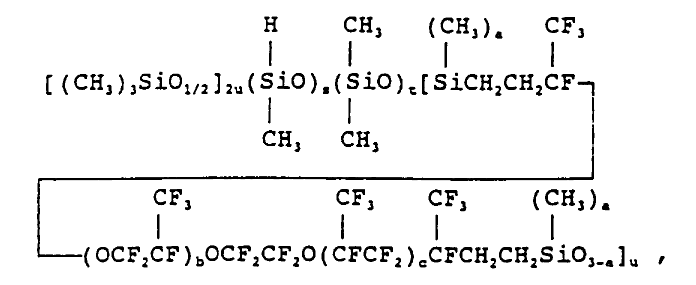 (où a, s, t, u et b sont des nombres entiers compris dans les intervalles de a = 1 à 2, s = 6 à 10, t = 0 à 10, u = 1 à 10, et b = 0 à 5, respectivement), et 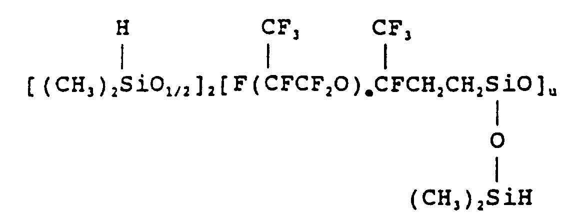 (où u est un nombre entier de 4 à 10, et e est un nombre entier de 1 à 7).

5. Composition selon la revendication 1 dans laquelle l'organohydrogénopolysiloxane (b) est utilisé en une quantité allant de 0,1 à 50 parties en poids pour 100 parties en poids de l'organopolysiloxane (a).

6. Composition selon la revendication 1, dans laquelle l'organohydrogénopolysiloxane (b) est utilisé en une quantité telle que la quantité totale de liaisons Si-H dans la composition est de 0,5 à 5,0 moles par mole des groupes aliphatiques insaturés présents dans la composition.

7. Composition selon la revendication 1, dans laquelle les groupes aliphatiques insaturés de l'organopolysiloxane (a) comprennent le groupe vinyle.

8. Composition selon la revendication 1, dans laquelle l'organopolysiloxane (a) contient les unités siloxane contenant le groupe aliphatique insaturé en une quantité de 0,001 à 2% molaire.

9. Composition selon la revendication 1, dans laquelle l'organopolysiloxane (a) est un organopolysiloxane contenant du fluor ayant une teneur en fluor d'au moins 0,5% en poids.
